# EUROPEAN PATENT APPLICATION

(11) **EP 4 848 178 A1**
(43) Date of publication of application: **02.12.2026**
(21) Application number: 25221969.6
(22) Date of filing: 09.12.2025
(51) Int. Cl.: G06Q 10/10, G06Q 10/107, H04L 51/02, H04L 51/42, G06F 16/353

(54) **FINE TUNED EMAIL REACTIONS**

(30) Priority: 30.05.2025 US 202519224088
(71) Applicant: BlackBerry Limited, Waterloo, Ontario N2K 0A7 (CA)
(72) Inventor: McBEATH, Sean Michael, Waterloo, N2K 0A7 (CA); ADAMS, Neil Patrick, Waterloo, N2K 0A7 (CA)
(74) Representative: Murgitroyd & Company

(57) **Abstract**

A method of creating reactions to emails. The method includes receiving, by an application executing on a processor, a selection of text within an email. The application receives an input indicating a first reaction associated with the selection of text. The application creates a reaction message that includes a text identifier corresponding to the selection of text and a reaction identifier corresponding to the first reaction. The application then sends the reaction message to one or more contacts associated with the email.

## Description

### BACKGROUND

Electronic communication continues to evolve rapidly and to further infiltrate our day-to-day lives. We rely on a myriad of different tools to electronically communicate with each other: voice calls, text messages, emails, social media posts, etc. Problems arise about how to manage this welter of electronic communication. Among these problems are managing the influx of emails, timely responding to the emails that matter, and ignoring or delaying responding to lower priority emails. It is not an uncommon experience for an important email to get lost in the flood of incoming emails if responding to that email is deferred temporarily to address a higher priority email. Responding to emails itself consumes a non-trivial amount of our daily working hours.

### SUMMARY

In an embodiment, a method of creating reactions to emails is disclosed. The method comprises receiving, by an application executing on a processor, a selection of text within an email; receiving, by the application, an input indicating a first reaction associated with the selection of text; creating, by the application, a reaction message comprising a text identifier and a reaction identifier; and sending, by the application, the reaction message to one or more contacts associated with the email.

In an embodiment, a method receiving one or more reactions to an email is disclosed. The method comprises receiving, by an application executing on a processor, a reaction message; displaying, by the application, a visual mark representing a receipt of the reaction message associated with the email, wherein the visual mark is different from a visual indication of an unread email; and displaying, by the application, one or more reactions in association with at least one string of text within the email when the email is displayed.

In another embodiment, a system of processing reactions to emails is disclosed. The system comprises a processor; a non-transitory memory; and an application stored in the non-transitory memory that, when executed by the processor receives a reaction message, the reaction message including an indication corresponding to a string of text; displays a visual mark representing a receipt of the reaction message associated with an email, wherein the visual mark is different from a visual indication of an unread email; and displays a first reaction in association with a string of text within the email when the email is displayed.

Accordingly, a method and system are provided as detailed in the claims that follow.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a system according to an embodiment of the disclosure.
FIG. 2 is an illustration of a user interface according to an embodiment of the disclosure.
FIG. 3 is another illustration of the user interface according to an embodiment of the disclosure.
FIG. 4 is another illustration of the user interface according to an embodiment of the disclosure.
FIG. 5 is a flow chart of a method according to an embodiment of the disclosure.
FIG. 6 is an illustration of a user interface of an email application for applying reactions to an email message according to an embodiment of the disclosure.
FIG. 7 is an illustration of an email message received by a user that contains a reaction to a selection of text.
FIG. 8 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

As discussed above, electronic messaging systems can bury users in a welter of in-coming messages. Managing and organizing this stream of electronic messages is a technical challenge that is endemic to the electronic messaging technology itself. The present disclosure teaches a particular technical solution to this technical challenge. Recently, electronic message systems have added support for reaction messages or, more simply termed, reactions. A reaction, as used herein, is a pre-defined responsive communication, that upon receipt, is represented by a simple visual mark or graphical representation. Such reactions can be easily and quickly input by a user to respond to a received electronic message. What a receiver of a reaction email interacts with is primarily a visual mark - a smiley face, a heart, a bottle of champagne being uncorked, illustrated in very simple form - that is presented in a display of their electronic device, possibly adjacent to their email in a list of emails. For example, a supervisor may send out a notice to the team that Susan is the salesperson of the month, and team members may reply to this email with reactions that carry visual marks of a smiley face, a heart, or a bottle of champagne being uncorked. This reaction would typically be received not just by the supervisor who sent the original email but all those who were addressed by the original email.

The reaction can take various forms including sending an emoji selected from a dictionary or catalog of well-known emojis. The reaction can take the form of sending other visual marks that may succinctly represent a response to a received email. For example, a simple cloud visual mark might represent doubt related to a proposal in an email. A simple cloud and lightning strike below the cloud visual mark might represent strong opposition to the proposal in the email. A lightbulb visual mark might represent the sender's judgment that the received email presented a brilliant idea. Sometimes the sentiment intended by a reaction may be vague or indefinite, but that is beside the point. In some electronic messaging tools, a user can reply to a received message by displaying a catalog of reactions in a user interface (UI) and clicking on one of the reactions. The reaction may then be sent in the form of a message that encapsulates the reaction to the original sender of the message being reacted to. While the main example discussed herein relates to a system for managing reactions in an email messaging tool, it is understood that the teachings herein may be advantageously applied to other electronic messaging tools.

Some users manage their email that is received in a default email folder by taking some action on the email and then moving the email to a different folder within the default email folder or to a different folder outside the default email folder. In some contexts, folders disposed inside other folders may be referred to as subfolders, but herein the more general term "folder" will be used. It is understood that the term "folder" can mean a top-level folder or a folder within another folder. The default folder may be an email "in-box" folder, for example. Other folders may be created for each of a plurality of different concerns, different projects, or different categories of tasks. For example, emails associated with an ACME client may be placed in the ACME client folder, and emails associated with a Wile E. Coyote client may be placed in the Wile E. Coyote client folder. For example, emails associated with marketing may be placed in a marketing folder, and emails associated with accounting may be placed in an accounting folder. For example, emails associated with a vacation may be placed in a UK Bus Tour folder, and emails associated with a Bluegrass jam group may be placed in a Bluegrass jam group folder. When an email has been read, acted upon, and moved into an appropriate folder, the user may assume that the status of the given email is resolved. But if a reaction is later received that relates to this email that has been stored away in an email folder, the status of the given email may be perturbed. For example, the given email that has received a new reaction may have its time stamp changed and may percolate up to the top of the default folder or to the top of the folder it has moved to. This may prompt the user to revisit the already dispositioned email. If many reactions are received, as may be the case in a professional team work environment, this email may receive many different reactions over time, causing the given email to percolate back up to the top of the time-ordered list of emails and further possibly distracting the user as he or she reopens the email many times to see what action needs to be taken.

The present disclosure teaches modifying the presentation of email information to avoid confusion of the status of an email and/or a set of related emails. When an email has been moved into a folder different from a default email folder (e.g., a default "in-box" email folder), and when the given folder is not the currently selected email folder or folder, when a reaction to the given email is received, a visual mark associated with the reaction is displayed adjacent to the given folder. If different reactions to the given email are received, different visual marks representing each different reaction are displayed adjacent to the given folder. Alternatively, in a simpler embodiment, a single visual mark may be displayed adjacent to the given folder that does not represent or betoken the particular reaction or reactions but just that some reaction has been received for some email within that given folder.

Alternatively, the original email may be received, read, and remain in the default email folder. As additional, unrelated emails are received, the original email may drop down in the list of time-ordered emails in the default email folder. When one or more reactions to the original email are received, the presentation of the email in the list of emails in the default email folder (e.g., a summary of the email including a timestamp, name of sender, name or receiver, subject line, etc.) does not change its ordered position in the list of emails but one or more visual marks may be placed adjacent to the email, for example to the left of the email in the list of emails.

In this way, the user can readily discern that there are new reactions associated with one or another email stored in the given folder or default folder. But the user will also understand that the email, by virtue of having been moved from the default email folder to the given folder or by virtue of having percolated lower in the list of emails and being marked as read (as for example by being un-highlighted versus an unread email that remains highlighted), has been actioned and he or she need not invest time reading and investigating the reaction. On the other hand, if the user wants to look at the reactions, the user can click on the email folder, find the emails with reactions posted against them, and learn more about the reactions (when they were sent, who sent them, and the like). In an embodiment, if a user clicks on reaction (e.g., on a visual mark betokening a reaction) while it is presented adjacent to the folder, the user interface may open the given folder and/or automatically open the associated email. The user, in this way, may be enabled to prioritize which reactions to read immediately and which to disregard or defer to examine later. For example, a user may defer looking at positive reactions but immediately examine negative reactions more promptly. By contrast, the existing email treatment of reactions would lead the user to believe that each reaction is a new email that needs to be processed, possibly immediately, thereby consuming valuable and limited attention of the worker. Even if the reactions are not presented by the email tool as a new independent email but instead attaches to the original email being reacted to, the conventional approach may result in this email percolating up in the order of emails presented due to a changed time-stamp of the given email.

In an embodiment, the visual marks adjacent to the folder and adjacent to the email list (if the user has selected the given folder for email focus) may time out and be removed. For example, the visual marks may be removed after a day, after two days, after three days. For example, the visual marks may be removed after a pre-defined duration of time. In an embodiment, each different user may define his or her own expiration time for visual marks. It is noted that the visual marks may be removed, after time out, from presentation adjacent to the folder but remain displayed adjacent to the list of individual emails if the folder is selected for email focus by the user.

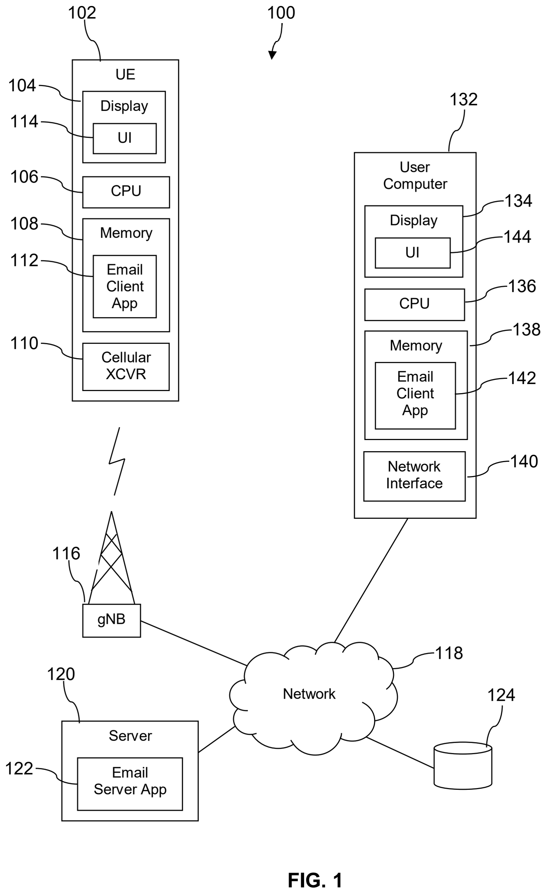

Turning now to FIG. 1, a system 100 is described. In an embodiment, system 100 comprises a user equipment (UE) 102 that comprises a visual display 104, a processor (CPU) 106, a memory 108, and a cellular radio transceiver 110. The display 104 may present a user interface (UI) 114 of a software application executing on the processor 106. The memory 108 comprises a non-transitory portion that stores one or more applications, for example an email client application 112. When the processor 106 executes the email client application 112, the UI 114 may be a UI of the email client application 112. In an embodiment, the UE 102 is a mobile phone, a smart phone, a personal digital assistant (PDA), a wearable computer, or a headset computer.

The cellular radio transceiver 110 is configured to establish a cellular radio communication link with a cell site 116. The radio link may be established according to a 6G, a 6G, a long-term evolution (LTE), a code division multiple access (CDMA), or a global system for mobile communication (GSM) telecommunication protocol. The cell site 116 may communicatively link the UE 102 to a network 118. In an embodiment, the network 118 comprises one or more public networks, one or more private networks, or a combination thereof. The network 118 may provide communications coupling of the UE 102 to other electronic devices coupled to the network 118, for example to a computer 120 that executes an email server application 122. The email server application 122 may store data associated with the email client application 112 in a data store 124 that is communicatively coupled to the computer 120. The data stored in the data store 124 may comprise emails directed to and sent by the UE 102 and/or a human user. It is understood that the email server application 122 may support a given email account holder to access his or her email through different electronic devices, for example via the email client application 112 executing on the UE 102 or via a user computer 132.

In an embodiment, the user computer 132 comprises a visual display 134, a processor (CPU) 136, a memory 138, and a network interface 140. A non-transitory portion of the memory 138 stores one or more applications, including an email client application 142. In an embodiment, the user computer 132 may have other devices for communicatively coupling to the network 118, in addition to or instead of the network interface 140. For example, in an embodiment, the user computer 132 may have a WiFi interface that communicates with a WiFi access point (AP), and the AP may be communicatively coupled to the network 118. For example, in an embodiment, the user computer 132 may have a satellite radio interface that communicates with a satellite, where the satellite communicates with a ground station, and where the ground station is communicatively coupled to the network 118. As said above, the same user may access his or her email account through the email client application 112 executing on the UE 102 or through the email client application 142 executing on the computer 132. The computer 132 may be a laptop computer, a desktop computer, a notebook computer, a tablet computer, or an electronic pad.

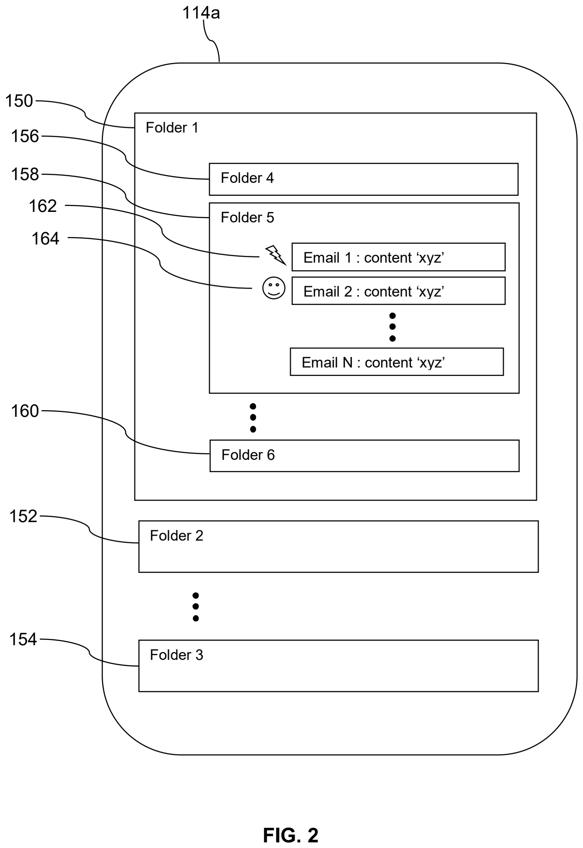

Turning now to FIG. 2, a first view of the UI 114 - UI 114a - is described. The UI 114a is presenting an interface of the email client application 112, whereby a user can view lists of emails, read emails, create emails, store emails, create email folders and folders, move emails among folders, and delete emails. The UI 114a comprises a first email folder 150, a second email folder 152, and a third email folder 154. It is understood that the UI 114a may present any number of email folders. In some instances, there may be more email folders than fit within the UI 114a and the user may be obliged to scroll down or scroll up to see some of the email folders.

As illustrated in FIG. 2, the first email folder 150 comprises a plurality of email folders including a fourth email folder 156, a fifth email folder 158, and a sixth email folder 160. The first email folder 150 may include or contain any number of email folders. The fifth email folder 158 is illustrated as having a first email, a second email, and a third email with some content associated with each email. A first visual mark 162 is illustrated adjacent to the first email, and a second visual mark 164 is illustrated adjacent to the second email. The first visual mark 162 is a simple image of a lightning strike or an electrical arc. The second visual mark 164 is a simple image of what may be referred to as a "smiley face." The visual marks 162, 164 represent reactions that other email users have created in response to the original email. The other email users may read the original email and then click on a button in their email UI to display a catalog of pre-defined reactions, select one of the reactions, and then send the reaction. The reactions are associated with visual marks that are displayed in an email tool. Herein, the term reaction is used to refer to the entire mechanism of defining, sending, and rendering reactions, while the term visual mark is used to refer to the visible presentation of the reaction. In some sense, these two terms are interchangeable and refer to the same thing. The term reaction is a bit more inclusive in that it refers to aspects that are not solely visible in nature - for example an email or other message format encapsulating a reaction is not solely visible. A reaction can be stored in the data store 124 while remaining undisplayed. The email tool of the user providing a reaction may then send the reaction embedded in an email or other message format to the sender of the original email. In an embodiment, reactions are also sent to other receivers of the original email. The reaction is a message including an identifier of the original message and an identifier of the reaction.

It is understood that the catalog of reactions may be extensive, and a wide variety of different visual marks that betoken the reactions are contemplated by the present disclosure. The catalog of reactions can be considered to comprise a pre-defined catalog of graphical symbols or visual marks. In an embodiment, the visual marks comprise what are commonly referred to as emojis - simple illustrations of objects - for example different variations on the theme of smiley faces including frowning faces, crying faces, surprised faces, etc. In an embodiment, the visual marks comprise different and/or additional simple illustrations such as lightning or electric arcs, light bulbs, a heart, an ice cream cone, a halo, a flame or fire, a skull-and-crossbones, a pile of ordure, a rocket blasting off, a rainbow, a champagne bottle opening, etc. It is understood that over time the catalog of reactions may be extended by adding yet more visual marks. Again, the meaning of the reactions and/or visual marks may be vague or indefinite. To some extent, the purpose of using such reactions to respond to emails is not intended to narrowly or precisely articulate an email reader's response or state of mind, and that is OK. If a user has selected the UI 114a to make the fifth folder 158 the focus (e.g., the folder that one is "located in" at the time), visual marks representing reactions may be dynamically added adjacent to emails as these reactions are received by the email server application 122.

In an embodiment, the visual marks 162, 164 may timeout and expire. When the visual marks 162, 164 expire, they may no longer be displayed adjacent to their associated emails. When the reaction is received and the visual mark 162, 164 first presented, a timer may be initiated by the email client application 112, 142, and when the timer counts up and exceeds a pre-defined count or time out value or counts down to zero from an initial pre-defined count or time, the presentation of the visual marks 162, 164 is stopped. In an embodiment, the UI 114, 144 may receive an input identifying an email in the fifth folder 158 and the first visual mark 162. In response, the email client application 112, 142 may indicate that the reaction has been read, for example by unhighlighting the first visual mark 162 or by unhighlighting (e.g., un-bolding) the associated email. In an embodiment, the UI 114, 144 can receive an input selecting the visual mark 162, 164, and the email client application 112, 142 can, in response, present metadata associated with the visual mark 162, 164. For example, the UI 114, 144 may indicate how many of each different reaction (e.g., each different visual mark) have been sent for the subject email. For example, the UI 114, 144 may indicate who sent the reactions and/or when the reactions were sent.

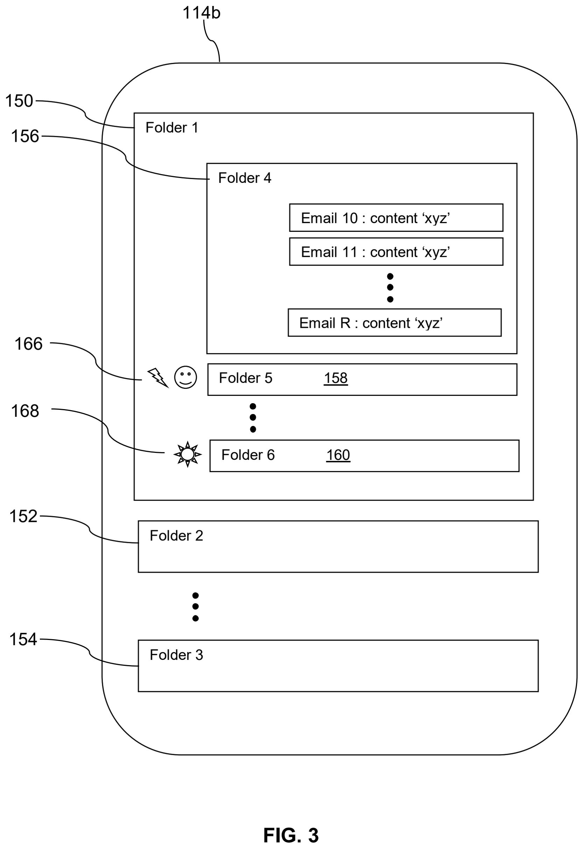

Turning now to FIG. 3, a second view of the UI 114 - UI 114b - is illustrated. For purposes of discussion, the UI 114b is presented on the visual display 104 or on the visual display 134 at a later time than the UI 114a. As illustrated in FIG. 3, the email focus has changed from the fifth folder 158 to the fourth folder 156. As illustrated in FIG. 3, the visual marks 162, 164 have been placed together as visual marks 166 adjacent to the fifth folder 158. Also illustrated in FIG. 3, a new reaction has been received related to the sixth folder 160 (e.g., "folder M") and is presented as visual mark 168 adjacent to the listed entry for the sixth folder 160. In this way, the user of the UE 102 or the user computer 132 looking at the UI 114 or UI 144 can be made aware that a reaction has been received for some email in a given folder. This can make the task of keeping up with one's email more manageable and avoid being deluged with a flood of reactions that one has to again and again click on to review. In some embodiments, the visual marks 166 and 168 are only displayed until the expiration of a timer. The timer can have different values for different categories of reactions. For example, negative reactions (e.g., thumbs down) can be displayed longer than positive reactions (e.g., thumbs up). In some embodiments, the user can configure the email program such that certain reactions are displayed adjacent to the fifth folder 158 and the sixth folder 160, while certain other reactions are not displayed adjacent to the folders 158, 160 that are not in focus at the time. In this case, the reaction may be displayed in conjunction with the email in the given folder even if it is not displayed adjacent to the folder. Such configuration allows the user to ignore and not spend time on certain reactions, while other reactions are emphasized to draw the user's attention. In the same way, reactions from certain individuals (e.g., spouse, boss) may be displayed adjacent to the folder, while reactions from other individuals (e.g., vendors) may not be displayed adjacent to the folder. In the same way, when a given email message receives a certain number of reactions (e.g., 3) then the reactions may be displayed adjacent to the folder. Otherwise, reactions are not displayed.

When the application focus shifts from the fourth folder 156 and/or from the fifth folder 158 to the first folder 150, the display of the fourth folder 156 may collapse and appear as represented in FIG. 2 and the visual marks 162, 164, 168 may continue to be displayed as they are in FIG. 3. When the application focus shifts from the first folder 150 to the second folder 160, the visual marks 162, 164, 168 may all be presented adjacent to the indication of the first folder 150 in the UI 114, 144. In an embodiment, if one or more of the emails associated with the visual marks 162, 164, 168 have been clicked on since the associated reactions were received or if one or more of the visual marks 162, 164, 168 have been clicked on, one or more of the visual marks 162, 164, 168 may not be presented adjacent to the indication of the first folder 150 in the UI 114, 144.

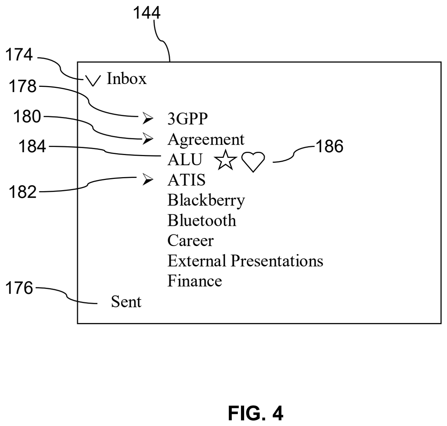

Turning now to FIG. 4, an illustration of the user interface (UI) 144 is described. In an embodiment, there may be differences between the displays of an email tool as accessed on the UE 102 versus as accessed on the user computer 132. In an embodiment, in the UI 144 the visual marks may be displayed on the right-hand side of email entries or folder names. The UI 144 may indicate an email inbox folder 174 and an email sent folder 176. The email inbox folder 174 may contain a 3GPP folder 178, an Agreement folder 180, and an ATIS folder 182, and so on. The Agreement folder 180 may have subfolders that are collapsed or not visible to the user (as indicated by the arrow). The ALU folder 184 may be associated with two different reactions 186 - one of which is represented by a star visual mark and the other of which is represented by a heart visual mark. If reactions are displayed adjacent to a folder with collapsed or non-displayed subfolders, and the user uncollapses that folder so that the corresponding subfolders are visible, then one or more of the reactions 186 may automatically move from the folder level to the subfolder level depending on which folder/subfolder contains the corresponding email.

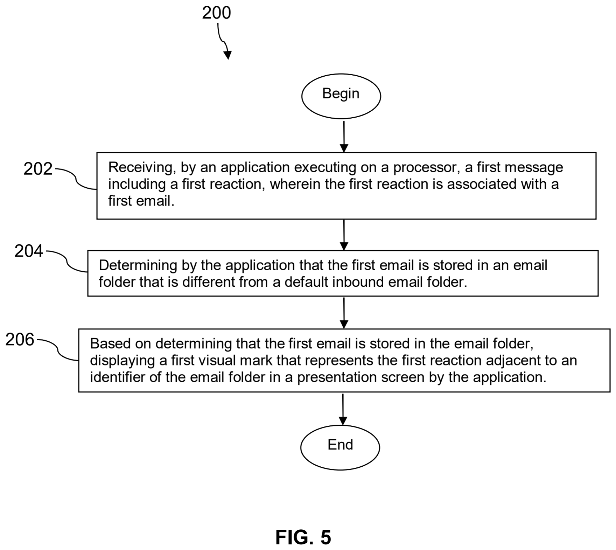

Turning now to FIG. 5, a method 200 is described. In an embodiment, the method 200 is a method of processing reactions to emails. At block 202, the method 200 comprises receiving, by an application executing on a processor, a first message including a first reaction, wherein the first reaction is associated with a first email. In an embodiment, the first reaction is an identification of a graphical symbol from a pre-defined catalog of graphical symbols. In an embodiment, the first message is itself an email. In an embodiment, the first message is another kind of message, for example a text message, a JSON message, an SMS message, an MMS message, or another type of electronic message.

At block 204, the method 200 comprises determining by the application that the first email is stored in an email folder that is different from a default inbound email folder. At block 206, the method 200 comprises, based on determining that the first email is stored in the email folder, displaying a first visual mark that represents the first reaction adjacent to an identifier of the email folder in a presentation screen by the application. In some embodiments, there is nothing displayed in the default in-box corresponding to the first reaction. In some embodiments, particularly with small screen devices such as UEs, the email client application may not display the folder hierarchy at the same time as displaying the default in-box. Rather, the user must first select a menu which then displays a list of folders, which the user can then select to navigate to that folder. In such an implementation, the first visual mark can be displayed after the user selects the menu. To alert the user that reactions have been received, the menu can be highlighted, annunciated, or updated with an alert such that the user understands that reactions have been received. In some embodiments, the folder hierarchy is also displayed when the user attempts to archive a message in a folder. In some embodiments, the first visual mark is also displayed in the folder listing that is displayed when the user attempts to archive a message. In other embodiments, the first visual mark is not displayed in the folder listing that is displayed when the user attempts to archive a message, but is displayed when the user selects the menu to navigate between folders.

In an embodiment, the method 200 further comprises receiving the first email by the application; displaying the first email in a presentation screen by the application; receiving an input to create the email folder by the application; receiving an input to move the first email to the email folder; and moving the first email to the email folder. In an embodiment, the method 200 further comprises removing the display of the visual mark in the presentation screen by the application based on expiration of a pre-defined period of time.

In an embodiment, the method 200 further comprises receiving a second message including a second reaction by the application, wherein the second reaction is associated with a second email; determining by the application that the second email is stored in the email folder; and based on determining that the second email is stored in the email folder, displaying a second visual mark that represents the second reaction adjacent to the first visual mark by the application. In an embodiment, the method 200 further comprises receiving an input identifying the email folder by the application; and displaying at least a portion of the first email and the first visual mark by the application. In an embodiment, the method 200 further comprises receiving an input identifying the first email by the application; and modifying the display of the first visual mark, wherein the status of the first reaction is indicated as having been read.

In an embodiment, at least one additional email is stored in the folder, wherein the at least one additional email is not associated with an unread reaction, and the method 200 further comprises identifying by the application which emails in the folder are associated with unread reactions; and displaying by the application at least a portion of the emails associated with unread reactions along with visual marks that represent the reactions. In some embodiments, the identified emails are the only emails displayed when the user selects the folder. In other embodiments, the identified emails are displayed first in an ordered list of emails with the at least one additional email displayed second in an ordered list of emails. In an embodiment, the method 200 further comprises displaying a user interface object by the application; receiving input by the application via the user interface object; and responsive to the input, displaying by the application the at least a portion of the emails associated with unread reactions along with visual marks that represent the reactions. In an embodiment, the method 200 further comprises displaying by the application at least a portion of the first email in a default in-box; and, if the first email is not archived in a folder, displaying by the application the first email in association with a visual mark that represents the first reaction.

With the introduction of reactions to emails, there are at least three distinct statuses of emails with reactions: (1) a read email having or associated with at least one unread reaction, (2) a read email having or associated with read reaction(s), and (3) an unread email having or associated with at least one unread reaction. The display of the email associated with a reaction can be different for each of these different statuses, thereby easing the email recipient in quickly apprizing his or her emails. For example, (1) a read email having or associated with at least one unread reaction can have normal text (e.g., not highlighted and not bolded) for the read email and an emphasized visual mark associated with the one or more reactions (e.g., highlighted or bolded). For example, (2) a read email having or associated with read reaction(s) can have normal text and normal visual mark associated with the one or more reactions. For example, (3) an unread email associated with at least one unread reaction can have an emphasized email text (e.g., the subject line of the email or the first several words of the email may be presented in highlighted or bolded text) and an emphasized visual mark associated with the one or more reactions (e.g., highlighted or bolded).

In another embodiment, at block 206 of method 200, based on determining that the first email is stored in the email folder, temporarily displaying, in the default inbound email folder, the first email (e.g., a subject line or a first several words of the first email) in conjunction with the first visual mark that represents the first reaction. In some embodiments, if the default inbound email folder is sorted based on time of email receipt, the first email is displayed based on the time of the first message (e.g., the first message containing the first reaction, which is later in time than the first email was received). In other embodiments, the first email is displayed based on the time the first email was received (e.g., the order is not shifted based on the time of the first message containing the first reaction). In an embodiment, the first email may be displayed in the default inbound email folder, temporarily, as "unread." In some embodiments, the first email is displayed in the default inbound email folder, temporarily, as "read." In an embodiment, in this case, a visual indication of the received reaction associated with the first email may be presented.

The display is temporary in that the email is removed (or otherwise no longer displayed) from the default inbound email folder after an event occurs. The event can be the expiration of a timer. The event can be the user clicking on the first email in the default inbound email folder. The event can be the user clicking anywhere in the inbound email folder while the first email is displayed (e.g., while a subject line or first several words of the first email). The above alternatives for temporarily displaying the first email in the default inbound email folder may be user configurable. In an embodiment, the user can configure certain categories of reactions to cause the associated email to reappear in the default inbound email folder, while other categories of reactions do not cause the associated email to reappear, temporarily, in the default inbound email folder.

In other embodiments, especially for small screen devices, navigation between folders can be cumbersome. To avoid such navigation and display issues, the user may be informed of reactions based on one or more user interface objects which are presented within the main user interface screen upon receipt of a reaction. Upon clicking the user interface object, the user may be presented a list of emails, even if the emails had been previously archived into one or more folders different from the default inbound email folder, in conjunction with the corresponding visual marks associated with the reaction. On selecting another user interface object, the user may return to the main user interface. In this way the user is able to quickly and easily view all reactions received regardless of folder.

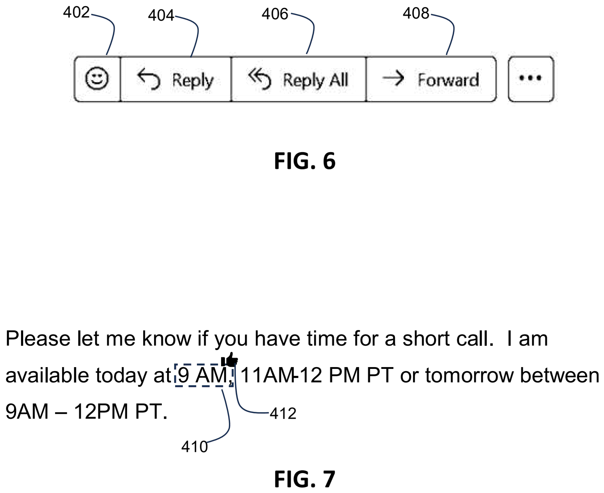

Turning now to FIG. 6 - FIG. Y, embodiments of sending message reactions are described. Reactions are well suited to instant messages, which typically contain a single thought. Emails, on the other hand, can contain a significant amount of text with multiple thoughts, sometimes with contradictory views. Thus, although a "smiley face" reaction to an entire email may be provided in some embodiments, it may not adequately convey the intended reaction. Thus, there is a need for fine-tuned reactions in an email environment. Novel solutions are needed in terms of user interface and messaging to facilitate such reactions.

FIG. 6 illustrates an embodiment where a user interface of an email messaging application provides a reaction button 402 (e.g., a smiley face or similar emoji) alongside buttons to "Reply" 404, "Reply All" 406, and "Forward" 408. Use of the reaction button 402 provides a user the ability to send a reaction response to an entire email message. However, in a scenario where the email includes a meeting/call request, such a reaction (e.g., a thumbs-up reaction to the email message) may not fully convey the recipient's intended thoughts. Accordingly, a "thumbs-up" reaction may convey that the recipient is open to a short call but fails to convey which time slot the recipient is available. Therefore, such a reaction may not be an adequate response to the email.

For example, an email message may be received by a recipient where the message includes a request for a meeting or call. The exemplary message may state:
"Please let me know if you have time for a short call. I am available today at 9 AM, 11AM-12 PM PT or tomorrow between 9AM - 12PM PT." For this type of message, the recipient may like to respond with a simple reaction rather than with a textual email response since an email response would create another unread email in the recipient's inbox, adding to the clutter or noise in what might already be a busy inbox full of unread email messages.

Instead, in an embodiment, a user may have the ability to select a portion of text within an email message and apply a reaction to the selection of text. For example, the user might select and/or highlight "today at 9 AM," or just "9AM" using the cursor. Once the portion of text is highlighted, the user interface may provide a prompt concerning the intention of the selection. For instance, a user may right click on the selection of text bringing up a context menu (sometimes referred to as a pop-up menu or shortcut menu). In current solutions, this context menu provides a user with menu items such as "Copy," "Translate," "Search," etc. In an embodiment, the context menu may provide a new option, "Reactions," for sending reactions. Upon selecting the "Reactions" context menu item, the user may be presented with a further pop up containing a variety of reactions and/or the ability to search for a specific reaction emoji. The user can select the desired reaction from the menu of reactions to associate the reaction with the selected text, which can then be sent to the set of correspondents associated with the email.

In an embodiment, a step of prompting the user may be provided to identify whether the reaction is a "reply" or a "reply-all" before the reaction is sent. In the case where the user clicked "Reply" or "Reply-All" prior to indicating a reaction to a portion of text, the prompt to select the intended recipients may be omitted. In an embodiment, the user may be prompted to close the "draft reply" after sending reactions if the "Reply" or "Reply All" was selected prior to sending a reaction. In an embodiment, if the user adds both text and reactions to a reply email, the reaction message is sent contemporaneously with the reply email. In some embodiments, the reply email and reaction message are included in the same message. If the user only adds reactions to a reply email (and does not add text), then only the reaction message is transmitted when the user clicks "send" or closes the draft reply.

Some embodiments may also allow for multiple selections of text where each selection of text may have its own reaction. In this embodiment, a user may be prompted whether additional reactions are intended before sending an initial reaction. For example, with respect to the above identified email, the recipient may want to provide a thumbs-up reaction to "9 AM" and a thumbs-down reaction to "tomorrow" indicating the recipient is available at 9AM the same day but not "tomorrow." Furthermore, these additional reactions may be at the textual level within the email or at the message level indicating a reaction to the email in its entirety.

In some embodiments, an artificial intelligence/machine learning (AI/ML) model may be integrated with the email application. This AI/ML model may highlight or select sub-sections of text that may be suitable for reactions, thereby alleviating the need, in some circumstances, for a user to select text suitable for a reaction. For example, the Al/ML model could identify "9 AM," "11-12 PM PT," or "tomorrow between 9AM - 12PM PT" as suitable for applying one or more reactions. As a user hovers over one of the identified text segments, the user is automatically provided with a pop-up for attaching a reaction to the pre-identified portion of text. In various embodiments, the set of possible reactions may be different depending on Al/ML determinations about the text itself.

Turning to reaction message format, an embodiment may format reactions as a JSON message where the JSON message includes an identifier of the reaction, an identifier of the sender, an identifier of the corresponding email or corresponding email thread, and an identifier of the text associated with each of the one or more reactions. The JSON message may include a first indication of whether the reaction is for the entire email message, specific text within the email message, or a combination including a reaction to the entire message along with one or more text specific reactions.

For an indication of specific text, the JSON message may include an identifier of the selected text. Since same or duplicate text could appear more than once in an email, the identification of the selected text may be identified using an (index, length) pair where the "index" is the starting position of a substring, with the first character in the string having an index of 0, and the "length" is the number of characters selected starting from the "index."

Turning back to the receiving side user interface, the receipt of a reaction within a user's email inbox may be presented by an email application through the various embodiments described above and with reference to FIG. 2 - FIG. 5. In the scenario where a reaction is associated with specific text or multiple reactions are attached to various portions of text, each section of specific text having an associated reaction may be highlighted 410, where the associated reaction 412 is overlaid on top of the highlighted portion 410 at the end of the text 410 as shown in FIG. 7. Alternative embodiment may provide the reaction overlaid in a different position such as the beginning or middle of the associated text or the bottom of the highlight, which may be dynamic based on formatting or visual preferences. In another embodiment, the highlighting 410 may only appear after the user hovers over the reaction 412 displayed above or adject to its corresponding text 410. In an embodiment where multiple reactions from multiple respondents are transmitted, hovering over each reaction may also provide a pop-up displaying the name or email of the user that sent the associated reaction. Furthermore, if multiple users provide a reaction to the same portion of text, the user interface may provide an indication of multiple reactions via a pre-defined icon, or as multiple reactions overlaid on top of one another. Hovering over the text or multi-reaction indication may cause all the reactions to expand, where each reaction is viewable in a stack, for example, and an identifier of the sender (e.g., name or email) is displayed alongside each reaction. Additional information such as the a time/date stamp may also be provided alongside the identifier of the sender.

As illustrated in FIG. 7, upon viewing the email message, a user may be presented with highlighted text 410 and the associated reactions 412 within the message. If the original message went to many people and the user received multiple reactions, the user may first be presented with each reaction next to the relevant inbox or folder where the email is stored as described previously and illustrated in FIG. 2 - FIG. 5. Alternatively, the email application interface may collect the set of reactions and present them in a unified view. In this case, a general identifier indicting "multiple responses" or "reactions" may be presented next to the corresponding email folder.

Upon opening the email, the user would be able to view the set of reactions by hovering over each reaction displayed in the body of the email message. In cases where there is reply text combined with reactions to the original text, a user interface object may be presented to direct the user to scroll down to view the location of the reactions. In another embodiment the selected text and emojis may be available directly in the reply section of the message. If the reaction (or the next reaction) is in a part of email text that is off screen, the email application may scroll to the location of the reaction upon opening the email message, or the user may be prompted via next/previous buttons, for example, to navigate to each reaction within the body of the email.

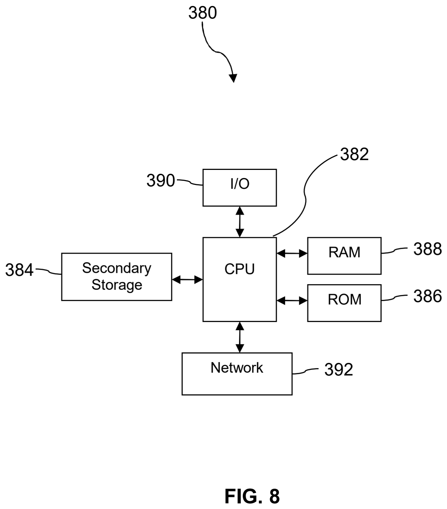

FIG. 8 illustrates a computer system 380 suitable for implementing one or more embodiments disclosed herein. For example, the US 102, the computer 120, and the user computer 132 may be implemented in a form like that of the computer system 380 described with reference to FIG. 5. The computer system 380 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB loT), near field communications (NFC), radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk-based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third-party provider. Some cloud computing environments may comprise cloud computing resources owned and operated by the enterprise as well as cloud computing resources hired and/or leased from a third-party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid-state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method of creating reactions to emails, comprising:
receiving, by an application executing on a processor, a selection of text within an email;
receiving, by the application, an input indicating a first reaction associated with the selection of text;
creating, by the application, a reaction message comprising a text identifier corresponding to the selection of text and a reaction identifier corresponding to the first reaction; and
sending, by the application, the reaction message to one or more contacts associated with the email.

2. The method of claim 1, wherein the reaction message further comprises at least one of (i) a sender identifier and/or (ii) a time stamp based on the time the reaction message is sent, wherein the sender corresponds to a user that input the first reaction.

3. The method of claim 1 or 2, further comprising displaying by the application a prompt for a user to indicate whether the first reaction is a (i) reply or a (ii) reply all.

4. The method of any preceding claim, further comprising displaying by the application a prompt for a user to indicate whether additional reactions will be added prior to sending the reaction message.

5. The method of any preceding claim, further comprising:
receiving, by the application, a second selection of text; and
receiving, by the application, an input indicating a second reaction associated with the second selection of text, wherein the created reaction message further comprises a second text identifier corresponding to the second selection of text and a second reaction identifier corresponding to the second reaction.

6. The method of any preceding claim, wherein the first reaction is received in a draft reply to the email and the reaction message is sent after the draft reply is closed.

7. The method of any preceding claim, further comprising:
automatically identifying at least one portion of text in the email that is suitable for a reaction;
displaying a visual mark at each identified portion of text for a user to interact with; and
displaying a menu of reactions to apply to a first identified portion of text when a user navigation corresponds to the first identified portion of text.

8. The method of any preceding claim, wherein the text identifier comprises an (index, length) pair, wherein the index is a starting position of the selection of text and the length is a number of characters selected starting from the index.

9. A method of receiving one or more reactions to an email, comprising:
receiving, by an application executing on a processor, a reaction message;
displaying, by the application, a visual mark representing a receipt of the reaction message associated with the email, wherein the visual mark is different from a visual indication of an unread email; and
displaying, by the application, one or more reactions in association with at least one string of text within the email when the email is displayed.

10. The method of claim 9 further comprising:
receiving, by the application, a second reaction message;
displaying a visual mark representing receipt of the second reaction message associated with the email; and
displaying a subsequent reaction corresponding to a second string of text or the at least one string of text.

11. The method of claim 9 or 10, wherein the first reaction message and the second reaction message originates from different contacts and each reaction message comprises a contact identifier.

12. The method of any one of claims 9 to 11, wherein the first reaction is overlaid on the string of text and the string of text is highlighted in a manner to identify the string of text, optionally wherein the text is highlighted after a user hovers an input device over the displayed first reaction.

13. The method of claim 10 or 11, wherein the first reaction and second reaction are displayed via a multi-reaction indication comprising one of (i) an icon representing multiple reactions to the string of text or (ii) the first reaction and second reaction overlaid on top of each other, optionally wherein hovering an input device over the multi-reaction indication expands the first reaction and second reaction to display each reaction associated with the string of text and/or displays information identifying a user that inputs the corresponding reaction.

14. The method of claim 13, wherein an identification of a user corresponding to the first reaction message is displayed next to the first reaction and an indication of a user corresponding to the second reaction message is displayed next to the second reaction after the first reaction and second reaction are expanded.

15. A system, comprising:
a processor;
a non-transitory memory; and
an application stored in the non-transitory memory that, when executed by the processor is configured to carry out the method of any preceding claim.
